# EUROPÄISCHE PATENTSCHRIFT

(11) **EP 0 396 160 B1**
(45) Veröffentlichungstag und Bekanntmachung des Hinweises auf die Patenterteilung: **06.09.1995**
(21) Anmeldenummer: 90112684.7
(22) Anmeldetag: 12.05.1987
(51) Int. Cl.: B64D 9/00, B60P 1/38, B65G 35/04, B65G 15/62

(54) **Einrichtung zum Beladen eines Laderaums eines Flugzeugs mit Stückgut**
Device for loading packages into a storage hold of an aircraft
Dispositif pour charger des colis dans une soute d'avion

(30) Priorität: 12.05.1986 DE 3615927
(43) Veröffentlichungstag der Anmeldung: 07.11.1990
(62) Teilanmeldung aus: 87903298.5
(73) Patentinhaber: SCANDINAVIAN BELLYLOADING COMPANY AKTIEBOLAG, S-220 12 Lund (SE)
(72) Erfinder: Helmner, Anders, S-222 48 Lund (SE)
(74) Vertreter: KUHNEN, WACKER & PARTNER

(56) Entgegenhaltungen:
- AU-B- 538 180
- US-A- 3 704 798
- US-A- 3 841 510

## Beschreibung

Die Erfindung betrifft eine Einrichtung zum Beladen eines Laderaums eines Flugzeugs mit Stückgut, nach dem Oberbegriff des Anspruchs 1.

Beispielsweise Stauräume für Gepäck von kleineren Flugzeugen sind häufig mit geringer Höhe im unteren Teil des Rumpfes angeordnet und in Längsrichtung des Rumpfes relativ langgestreckt. Wenn hierin Stückgut wie Fluggastgepäck verstaut werden soll, so müssen die ersten Stücke tief in den Laderaum hinein bis in den Bereich von dessen Rückwand gebracht werden, wonach der Laderaum von der Rückwand her fortschreitend bis in den Bereich der Beschickungsöffnung gefüllt werden kann. Dies ist umständlich und zeitraubend.

Zur Erleichterung der Beschickung und Entladung eines solchen Laderaums eines Flugzeuges ist es aus der Literaturstelle SPEEDNEWS vom 01. Juni 1984 bekannt geworden, eine solche Einrichtung entsprechend dem Oberbegriff des Anspruchs 1 auszubilden.

Das dortige Transportorgan besteht aus drei voneinander getrennten Elementen, die zur Anpassung an die Wölbung des Bodens des Laderaums gegeneinander abgewinkelt sind.

Das erste Transportelement als Hauptelement ist mittig und horizontal angeordnet und besteht aus zwei zugfesten Bändern, die am rückwärtigen Ende des Laderaums auf Rollen aufwickelbar sind, und einer teppichartigen Transportunterlage, die sich in Flugrichtung nach vorne an die Bänder anschließt und auf einer vorderen Rolle oder Walze in Flugrichtung vor der Beschickungsöffnung aufwickelbar ist. An der Verbindungsstelle zwischen den beiden Bändern und der teppichartigen Transportunterlage ist eine Laderückwand angeordnet, die im Zuge des Beschickungsvorganges von einer zur Beschikkungsöffnung benachbarten Stellung fortschreitend nach hinten bewegbar ist, wobei die beiden Bänder auf ihren Rollen zunehmend aufgewickelt und die teppichartige Transportunterlage von ihrer Walze zunehmend abgewickelt wird, bis die Laderückwand schließlich im Bereich der hinteren Laderaumwand steht und die teppichartige Transportunterlage sich über die gesamte Länge des Laderaums erstreckt.

Das zweite Transportelement ist eine teppichartige Transportunterlage, die nach Art eines Endlosriemens um eine vordere und hintere Umlenkrolle oder -walze geführt ist, wobei die hintere Umlenkwalze in Höhe der hinteren Aufwickelrolle für die Bänder und die vordere Umlenkwalze in Höhe der vorderen Aufwickelwalze für das mittlere Transportelement angeordnet, gegenüber deren Achsen jedoch geneigt sind. Das zweite Transportelement ist an der der Beschickungsöffnung gegenüberliegenden Seite des Laderaums angeordnet.

Das dritte Transportelement ist ebenfalls eine teppichartige Transportunterlage, die nach Art eines Endlosriemens um eine hintere Umlenkwalze in Höhe der Aufwickelrollen für die Bänder und um eine vordere Umlenkwalze umgelenkt ist, die jedoch in der Nachbarschaft des in Flugrichtung hinteren Randes der Beschickungsöffnung angeordnet ist. Dadurch ist das dritte Transportelement kürzer als das erste und das zweite Transportelement und spart in seiner Längserstreckung die Beschickungsöffnung aus. Die Umlenkwalzen für das dritte Transportelement sind entsprechend gegenüber der Horizontalen geneigt angeordnet, so daß das horizontale erste Transportelement mit den beiden seitlichen zweiten und dritten Transportelementen eine Rinne bildet, deren Umriß polygonförmig an die Wölbung des Bodens des Flugzeugrumpfes annähernd angepaßt ist.

Ein motorischer Antrieb für die Einrichtung ist aus der im wesentlichen nur zeichnerischen Darstellung dieser Literaturstelle nicht ersichtlich. Es wird jedoch unterstellt, daß mit einem motorischen Antrieb gearbeitet wird. Aufgrund der konstruktiven Bedingungen kann dieser sinnvoll nur an der Laderückwand angreifen und diese bewegen, wodurch die Laderückwand das mittlere horizontale Transportelement derart hin- und herbewegt, daß bei einer Bewegung im Beladungssinne die Bänder zunehmend auf den hinteren Aufwickelrollen aufgewickelt und die teppichartige Transportunterlage von ihrer Aufwickelwalze abgewickelt wird, und umgekehrt bei einer Bewegung im Entladungssinne. Die Laderückwand überspannt auch die Transpotunterlage der beiden seitlichen Transportelemente und ist offensichtlich an diesen befestigt, so daß über einen solchen Antrieb auch die nach Art eines Endlosriemens ausgebildeten Transportunterlagen der seitlichen Transportelemente mitbewegt werden.

Diese bekannte Einrichtung ermöglicht zwar ein Abstellen sämtlicher Gepäckstücke oder dergleichen im Bereich der Beschickungsöffnung, ohne die dahinterliegenden Teile des Laderaums zu betreten, und gestattet dennoch eine vollständige Befüllung des Laderaums sowie anschließend eine entsprechende Entladung. Die bekannte Einrichtung weist jedoch eine Reihe gravierender Nachteile auf.

So ist bei einer Verwendung von drei getrennten und unabhängig voneinander gelagerten Transportunterlagen nicht nur eine Beeinträchtigung des Ladeguts durch den Spalt zwischen den Transportelementen kaum zu vermeiden, sondern insbesondere die praktische Bewerkstelligung des Antriebs schwierig; aus der Literaturstelle ist demzufolge auch kein Ansatzpunkt für die konstruktiv konkrete Ausbildung des Antriebs erkennbar. Dabei ist zu bedenken, daß das Ladegut sehr erhebliches Gewicht besitzt und die Transportunterlage mit dem daraufliegenden hohen Ladegutgewicht unter Überwindung der bodenseitigen Reibung gezogen werden muß, wofür ganz erhebliche Kräfte erforderlich sind. Im Falle einer Einleitung dieser Kräfte über die Laderückwand muß diese demzufolge sehr erheblichen Krafteinleitungen standhalten und daher konstruktiv in besonderer Weise ausgebildet und geführt werden, wofür keine konstruktive Lösung zur Verfügung steht. Im Bereich der Laderückwand angeordnete Antriebselemente stören überdies im Laderaum.

Und zwar wirkt die stärkste Belastung auf den horizontalen Mittelteil des Transportorgans, der durch die horizontale Transportunterlage des ersten Transportelementes gebildet ist, jedoch wirken auch auf die umlaufenden seitlichen bandförmigen Transportunterlagen immer noch sehr erhebliche Gewichtskräfte vom Ladegut her. Während die Transportunterlage des ersten, mittleren Transportelementes unmittelbar auf dem Boden des Laderaums gleiten kann, so daß für annehmbare Gleitbedingungen gesorgt werden kann, laufen die beiden Abschnitte der seitlichen Endlosbänder aufeinander und bewegen sich im Zuge des Be- und Entladevorganges gegensinnig zueinander. Hierdurch treten sehr erhebliche Reibungskräfte zwischen den Abschnitten der textilen Transportunterlage auf, die wiederum erhöhte Antriebskräfte erfordern und zu einem schnellen Verschleiß oder Beschädigungen der seitlichen Transportunterlagen führen.

Infolge der Neigung der seitlichen Transportunterlagen treten dort unter der Gewichtskraft des Ladegutes weiterhin seitliche, zur Mitte hin wirkende Kräfte auf, welche die Tendenz haben, die seitlichen Transportunterlagen nach innen zu kontrahieren. Durch die dadurch hervorgerufene Faltenbildung treten im Verein mit den schlechten Gleitbedingungen Reibungsspitzen auf, die den Verschleiß und die Zerstörung der seitlichen Transportunterlagen noch erheblich beschleunigen.

Demgegenüber liegt der Erfindung die Aufgabe zugrunde, eine Einrichtung der im Oberbegriff des Anspruchs 1 angegebenen Gattung zu schaffen, bei der die Reibungsbelastung der Transportunterlage insbesondere bei Bewegung unter Last erheblich vermindert und somit deren schonende, verschleißarme Bewegung mit vermindertem Kraftaufwand ermöglicht ist.

Die Lösung dieser Aufgabe erfolgt durch die kennzeichnenden Merkmale des Anspruchs 1.

Durch die Verwendung einer Gleitplatte zur Abstützung der Transportunterlage gegen das Gewicht des Ladeguts wird gewährleistet, daß die Transportunterlage auf einer Oberfläche mit guten Gleiteigenschaften abgestützt ist und daher auch unter Last reibungsarm bewegt werden kann. Die hängende Abstützung der Gleitplatte an ihren Seitenrändern beispielsweise unter Abspannung zu einer Profilschiene in der Seitenwand des Laderaums ermöglicht deren Lagerung unter Vermeidung jeglicher Lagerelemente auf der Ober- oder Unterseite der Gleitplatte sowie unter Minimierung des Lagerungsaufwandes und insbesondere des Lagerungsgewichtes. Dadurch, daß die hängende Abstützung so erfolgt, daß auch bei maximaler Nennlast ein Spalt zur bodenseitigen Stützkonstruktion des Laderaumes verbleibt, wird gewährleistet, daß unter allen während des Lade- oder Entladevorganges auftretenden Belastungsbedingungen ein an der Unterseite der Gleitplatte zurückgeführter Abschnitt der Transportunterlage frei bleibt von jeglichen Klemmkräften und damit jeglicher Reibung, so daß bei einer Bewegung der Transportunterlage unter Last in jedem Falle nur die verminderte Reibung zwischen dem lasttragenden Abschnitt der Tansportunterlage und der reibungsgünstigen Oberfläche der Gleitplatte zu überwinden ist. Lediglich bei extremen Belastungen während des Flugbetriebes kann ein Schließen dieses Spaltes an der Unterseite der Gleitplatte und damit ein Einklemmen eines dort rückgeführten Abschnittes der Transportunterlage auftreten; unter solchen Bedingungen ist jedoch eine Bewegung der Transportunterlage nicht nur nicht erforderlich, sondern sogar unerwünscht.

Die Gleitplatte führt unvermeidlich zu einem gewissen Gewichtszuwachs der Einrichtung, wie er bei Flugzeugaggregaten grundsätzlich unerwünscht ist. Jedoch können die so erzielten vorzüglichen Gleitbedingungen dazu benutzt werden, im Bereich des Antriebes und an Abstützungen gegen die Antriebskräfte Konstruktionsgewicht einzusparen, da die erforderlichen Antriebskräfte erheblich geringer sind. Weiterhin kann die Gleitplatte den bodenseitigen Abschluß des Laderaums zur bodenseitigen Stützkonstruktion hin bilden, so daß die Innenbeplankung der bodenseitigen Stützkonstruktion des Laderaums bei Bedarf entfallen kann und auf diese Weise wiederum Gewicht gespart werden kann. Die bodenseitige Stützkonstruktion selbst bleibt aber zumindest in ihren tragenden Teilen bestehen und dient zur Abstützung der Gleitplatte für den Fall, daß diese durch Zusatzbelastung, insbesondere durch Fliehkräfte im Flug, weiter aufgewölbt wird und gegenüber zu starker Auswölbung eine flugzeugseitige Abstützung benötigt.

Gemäß Anspruch 2 kann hierbei die seitliche Befestigung der Gleitplatte in besonders bevorzugter Weise über Federn erfolgen, die bei erhöhter Gewichtsbelastung der Gleitplatte gespannt werden. Auf diese Weise werden Bewegungen der belasteten Gleitplatte und der im Flug auftretenden Fliehkräfte gezielt ermöglicht und zugleich eine Einführung zu großer Spannungen in die Gleitplatte vermieden. Hierzu sind gemäß Anspruch 3 bevorzugt im mittleren Bodenbereich des Laderaums in Längsrichtung verlaufende Stützschienen vorgesehen, welche bei überstarker Absenkung der Gleitplatte definierte Auflager für die Gleitplatte bilden und diese so sauber ohne Einleitung unerwünschter Kräfte bei Belastungsspitzen im Flugbetrieb abstützen.

Eine besonders hohe Tragfähigkeit der Gleitplatte bei dennoch geringem Gewicht ergibt sich, wenn die Gleitplatte gemäß Anspruch 4 in Verbund-Leichtbauweise als biegesteife Waben- oder Sandwichkonstruktion ausgebildet ist.

Im Falle einer über die Länge des Laderaums durchgehenden Ausbildung der Gleitplatte als solcher ist eine mechanische Rückhaltekonstruktion für die seitlichen Ränder der Transportunterlage gemäß Anspruch 5 bevorzugt an der Oberseite der Gleitplatte angeordnet und über diese gegen die flugzeugseitigen Profilschienen oder dergleichen festgelegt. Bei Bedarf kann auch an der Unterseite der Gleitplatte eine entsprechende Rückhaltekonstruktion vorgesehen sein, jedoch wirken wesentliche, eine seitliche Kontraktion der Transportunterlage herbeiführende Kräfte lediglich auf der Oberseite. Gemäß Anspruch 6 ist die mechanische Rückhaltekonstruktion bevorzugt als Halteschiene mit Fangrand ausgebildet, welcher an der Oberseite der Transportunterlage angeordnete vorspringende Halteelemente vorzugsweise mit Spiel übergreift. Als Halteelemente können beispielsweise Kunststoffknöpfe oder dergleichen am oberen Randbereich der Transportunterlage befestigt sein, die im unbelasteten Zustand mit Abstand vom Fangrand in Längsrichtung bewegt werden können, bei einer Tendenz zur Seitenkontraktion des entsprechenden Randes der Transportunterlage aber an einer Einwärtsbewegung gehindert sind, wenn sie mit dem Fangrand in Eingriff gelangen. Auf diese Weise ergibt sich im normalen Betrieb minimale Reibung und dennoch eine sichere Halterung des seitlichen Randes der Transportunterlage. Eine Faltenbildung, welche die Reibung der Transportunterlage auf der Oberfläche der Gleitplatte und insbesondere den Verschleiß der Transportunterlage erhöhen würde, ist sicher ausgeschlossen.

Weitere Einzelheiten, Merkmale und Vorteile der Erfindung ergeben sich aus der nachfolgenden Beschreibung einer Ausführungsform anhand der Zeichnung.

Es zeigt
Fig. 1 schematisch vereinfacht einen Schnitt durch den Unterteil eines Flugzeugrumpfes quer zu dessen Längsausstrekkung, und
Fig. 2 die Einzelheit aus dem strichpunktierten Rechteck XXI in Fig. 1 in vergrößerter Darstellung.

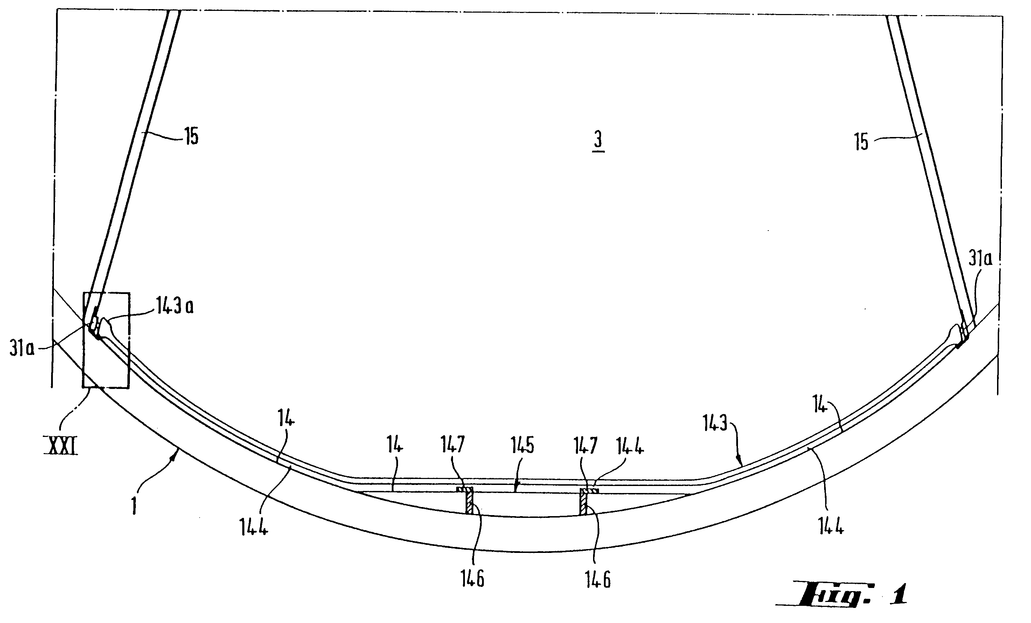

In der Zeichnung ist mit 1 ein Flugzeugrumpf bezeichnet, von dem in Fig. 1 lediglich der untere Teil sichtbar ist, in dem ein insgesamt mit 3 bezeichneter Laderaum angeordnet ist. Der grundsätzliche Aufbau solcher Laderäume 3, die innerhalb des Flugzeugrumpfes mit Schottwänden abgeschlossen sind und über eine Ladeluke in der Außenhaut des Flugzeugrumpfes 1 zugänglich sind, ist hinlänglich bekannt.

Zum Transport von Ladegut in die Tiefe des Laderaums 3 hinein und wieder zurück in den Bereich der Ladeluke ist im Bereich des mit 14 bezeichneten Bodens des Laderaums 3 eine - in Fig. 1 aus Gründen der Übersichtlichkeit nicht näher dargestellte - Transportunterlage 18 vorgesehen, welche den Boden 14 nach Art eines gleitbeweglichen Teppichs abdeckt und darauf abgestelltes Ladegut somit in Längsrichtung des Laderaums 3 befördern kann, wie dies grundsätzlich aus der Literaturstelle SPEEDNEWS vom 1. Juni 1984 bekannt ist. Im Beispielsfalle ist jedoch im Unterschied zu dieser bekannten Konstruktion eine einteilige teppichartige Transportunterlage 18 zwischen den beiden seitlichen Rändern des Bodens 14 des Laderaums 3 angeordnet, welche in Annäherung an die Form des Bodens 14 des Laderaums 3 Bogenform besitzt und im Bereich der Ladeluke unter Umlenkung abgestützt sowie von einem am anderen Ende im Laderaum angeordneten, nicht näher dargestellten Antrieb in der einen oder anderen Bewegungsrichtung gezogen wird. Wegen näherer Einzelheiten der Konstruktion im übrigen wird auf die EP-A-305391 verwiesen und Bezug genommen.

Wie die Zeichnung veranschaulicht, wird der Boden 14 des Flugzeugrumpfes 1 von einer Gleitplatte 143 überspannt, welche an seitlichen Profilleisten 31a abgehängt ist und zum Boden 14 über die gesamte Breite einen Spalt 144 läßt. Die Gleitplatte 143 bildet im Beispielsfalle über die gesamte Länge des Laderaums 3 dessen bodenseitigen Abschluß und ist an ihrer Ober- und Unterseite von der Transportunterlage 18 bzw. von an diese anschließenden Zugbändern bedeckt. Auf diese Weise kann sich die Transportunterlage 18 im Spalt 144 frei bewegen, ohne daß diese Bewegung durch gegenseitige Anlage, Einklemmen oder dergleichen behindert wäre. Hierzu muß die Gleitplatte 143 entsprechende Zugkräfte aufnehmen können, was bei geringem Gewicht und geringer Bauhöhe durch eine geeignete Verbund-Leichtbauweise erreicht werden kann, etwa eine Sandwichbauweise oder insbesondere eine Wabenbauweise, wie dies weiter unten noch näher erläutert wird. Die Anordnung ist dabei so getroffen, daß unter der maximalen aufliegenden Nennlast eine Längung der Gleitplatte 143 allenfalls in dem Umfang erfolgt, daß der Spalt 144 nirgends vollständig geschlossen ist, so daß beim Be- und Entladen stets ein freier Spalt 144 zur Verfügung steht.

Dennoch können Flugsituationen auftreten, in denen erhebliche Fliehkräfte in Richtung auf den Boden 14 wirken und das Gewicht des auf der Gleitplatte 143 aufliegenden Stützgutes vervielfachen. Um bei solchen Verformungen der Gleitplatte 143 deren Beschädigung zu vermeiden, ist der Spalt 144 insbesondere im Mittelbereich des Laderaums 3 so gewählt, daß bei übermäßiger Belastung, etwa dem 1,5-fachen der maximalen Nennlast, eine Verformung der Gleitplatte 143 durch bodenseitige Abstützungen abgefangen wird, beispielsweise vom Boden 14 selbst.

Zur Kompensation der zusätzlichen Gewichtsbelastung durch die tragfähige Gleitplatte 143 kann ein Teil der oberflächenseitigen Konstruktion, also der Beplankung des üblichen Bodens 14 im Bereich des Laderaums 3 herausgenommen werden, wobei aber die nur schematisch angedeutete bodenseitige Stützkonstruktion 145 erhalten bleibt, die im Beispielsfalle zwei zu beiden Seiten der Längsmittellinie des Flugzeugs aufrecht stehende Stützen 146 aufweisen möge. Anstelle der Beplankung im dortigen Ebenenbereich des Bodens 14 sind lediglich zwei seitlich abgespannte Stützschienen 147 vorgesehen, die an ihrer Unterseite an den Stützen 146 abgestützt sind und ihrerseits als Auflager für die Gleitplatte 143 bei überstarker Deformation dienen. Auf diese Weise ist die Verformbarkeit der Gleitplatte 143 in ungewöhnlichen Flugsituationen beschränkt.

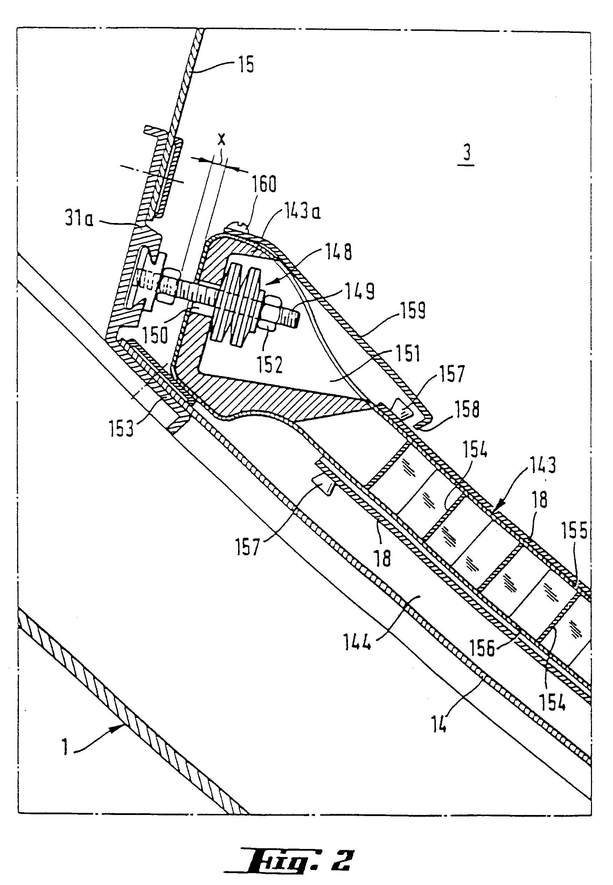

Um trotz Erzielung einer ausreichenden Höhe des Spaltes 144 die Materialverformungen der Gleitplatte 143 zu minimieren, ist diese seitlich über entsprechend harte Federn 148 abgestützt, wie dies in Fig. 2 veranschaulicht ist. Hierzu ist in der Profilschiene 31a eine Haltekonstruktion angeordnet, die mit Außengewinde versehene Haltebolzen 149 trägt. Die Gleitplatte 143 weist an ihren Seitenrändern eine Verdickung 143a auf, die Durchtrittsöffnungen 150 für die Haltebolzen 149 sowie örtliche Ausnehmungen 151 für die Anordnung einer Kontermutter 152 und der Federn 148 aufweist, die im Beispielsfalle als ein Paket von Tellerfedern ausgebildet sind. Die vertikale Abstützung der Ränder der Gleitplatte 143 erfolgt im Bereich der Verdickung 143a an einer Stützschiene 153 der Profilleiste 31a. In Fig. 2 ist der voll belastete Zustand der Gleitplatte 143 dargestellt, in dem die Federn 148 voll komprimiert sind und die Verdickung 143a sich um eine Strecke x von ihrem äußeren Gegenlager entfernt hat, an welches sie mittels der Konterschraube 152 in Ruhestellung mit definierter Kraft über die Federn 148 angedrückt wird. Auf diese Weise steht beidseitig ein Federweg x zur Verfügung, um ein Nachgeben der Gleitplatte 143 bei außergewöhnlichen Belastungen zu ermöglichen und so Verformungen von deren Material zu vermeiden. Wie in Fig. 2 angedeutet ist, besteht die Gleitplatte 143 im Beispielsfalle aus vertikalen Wabenwänden 154, die beispielsweise aneinander angrenzende Sechsecke bilden können und beidseitig durch Abdeckplatten 155 und 156 abgeschlossen sind, auf denen die Transportunterlage 18 gleitet.

Wie ebenfalls aus Fig. 2 ersichtlich ist, läßt sich eine einfache seitliche Sicherung der Lage der Ränder der Transportunterlage 18 erreichen. Hierzu weisen die seitlichen Ränder der Transportunterlage 18 Halteelemente 157 in Form von beispielsweise aufgenieteten vorspringenden Kunststoffknöpfen auf, die im unbelasteten Zustand der Transportunterlage 18 durch deren Materialsteifigkeit in ihrer seitlichen Position abgestützt werden. Sobald jedoch etwa durch das Stückgut Kräfte wirksam werden, welche versuchen, die Halteelemente 157 in Richtung auf die Mittellinie des Flugzeugs zu ziehen, gelangen diese in Eingriff mit einem Fangrand 158 einer Halteschiene 159 und werden so an einer weiteren Einwärtsbewegung gehindert.

Auf diese Weise ergibt sich im normalen Betrieb keine Reibungsbehinderung durch eine Halterung der seitlichen Ränder der Transportunterlage 18, aber dennoch eine saubere seitliche Lagesicherung bei kontrahierenden Kräften vom Ladegut her, da diese dann die Halteelemente 157 in die Anlage an den die Halteelemente 157 übergreifenden Fangrand der Halteschiene 159 drücken.

Im allgemeinen ist es ausreichend, die Halteschiene 159 an der Oberseite der Gleitplatte 143 vorzusehen, wobei sie an der Verdickung 143a gelagert, beispielsweise bei 160 verschraubt sein kann, und so nur mittelbar gegen die Profilschiene 31a festgelegt ist. An der Unterseite genügt die Materialsteifigkeit der Transportunterlage 18 zur Positionierung der Seitenränder, wobei die an der Unterseite laufenden Halteelemente 157 im Spalt 144 in unmittelbarer Nachbarschaft der Verdickung 143a zu liegen kommen und somit bei Verformungen der Gleitplatte 143 vor Quetschkräften geschützt sind.

## Patentansprüche

1. Einrichtung zum Beladen eines Laderaums (3) eines Flugzeuges mit Stückgut,
mit wenigstens einem von einer Beschickungsöffnung des Laderaums (3) aus in Richtung auf dessen gegenüberliegendes Ende und zurück motorisch bewegbaren Transportorgan,
das in Form einer teppichartigen Transportunterlage (18) aus einem flexiblen Textilmaterial flächig den Boden (14) des Laderaums (3) abdeckt und mit welchem im Bereich der Beschickungsöffnung auf das Transportorgan aufgegebenes Stückgut von der Beschickungsöffnung weg in den Laderaum (3) hinein und beim Entladen wieder in Richtung auf die Beschickungsöffnung zurück transportierbar ist,
dadurch gekennzeichnet,
daß die Transportunterlage (18) an einer Gleitplatte (143) abgestützt ist, und
daß die Gleitplatte (143) an ihren Seitenrändern hängend derart über der bodenseitigen Stützkonstruktion (145) des Laderaums (3) abgestützt ist, daß bei maximaler Nennlast auf der Transportunterlage (18) noch kein Aufsetzen der Gleitplatte (143) auf die bodenseitige Stützkonstruktion (145) des Laderaums (3) erfolgt.

2. Einrichtung nach Anspruch 1, dadurch gekennzeichnet, daß die seitliche Befestigung der Gleitplatte (143) über Federn (148) erfolgt, die durch die Last auf der Transportunterlage (18) unter erhöhte Spannung gesetzt werden.

3. Einrichtung nach Anspruch 1 oder 2, dadurch gekennzeichnet, daß im mittleren Bereich des Laderaums (3) in Längsrichtung verlaufende Stützschienen (147) vorgesehen sind, welche bei überstarker Absenkung der Gleitplatte (143) definierte Auflager für die Gleitplatte (143) bilden.

4. Einrichtung nach einem der Ansprüche 1 bis 3, dadurch gekennzeichnet, daß die Gleitplatte (143) in Verbund-Leichtbauweise als biegesteife Waben- oder Sandwichkonstruktion vorgesehen ist.

5. Einrichtung nach einem der Ansprüche 1 bis 4, dadurch gekennzeichnet, daß die seitlichen Ränder der Transportunterlage (18) durch eine mechanische Rückhaltekonstruktion gegen unerwünschte seitliche Kontraktionsbewegungen gesichert sind, und daß die Rückhaltekonstruktion an der Oberseite der Gleitplatte (143) angeordnet ist.

6. Einrichtung nach Anspruch 5, dadurch gekennzeichnet, daß die Rückhaltekonstruktion eine Halteschiene (159) mit Fangrand (158) aufweist, der an der Oberseite der Transportunterlage (18) angeordnete vorspringende Halteelemente (157) vorzugsweise mit Spiel übergreift.

## Claims

1. Means for loading packages into a cargo hold (3) of an aeroplane,
comprising at least one conveyor which is motor-driven such as to be movable from a charging opening of said cargo hold (3) in the direction of the opposite end thereof and back,
said conveyor covering the surface of the floor (14) of said cargo hold (3) in the form of a carpet-type transport support (18) of a flexible textile material and providing for the possibility of transporting packages charged onto the conveyor in the area of the charging opening away from said charging opening into said cargo hold (3), and back again towards said charging opening for unloading,
characterised in that
said transport support (18) rests on a sliding panel (143), and
that said sliding panel (143) rests above the floor-side support structure (145) of said cargo hold (3) by being suspended by its lateral edges such that at a maximum nominal load on said transport support (18), said sliding panel (143) does not yet contact said floor-side support structure (145) of said cargo hold (3).

2. Means according to claim 1, characterised in that lateral mounting of said sliding panel (143) is effected by means of springs (148) tensioned more strongly by the load on said transport support (18).

3. Means according to claim 1 or 2, characterised in that in the central area of said cargo hold (3), support rails (147) are provided in the longitudinal direction to form defined bearings for said sliding panel (143) when said sliding panel (143) is depressed excessively.

4. Means according to any one of claims 1 through 3, characterised in that said sliding panel (143) is provided in the form of a deflection resistant cell or sandwich structure in composite lightweight construction.

5. Means adccording to any one of claims 1 through 4, characterised in that the lateral edges of said transport support (18) are secured against undesirable lateral contracting movements by a mechanical retaining structure, and that said retaining structure is arranged on the upper side of said sliding panel (143).

6. Means according to claim 5, characterised in that said retaining structure comprises a securing rail (159) having a gripping edge (158) which engages retaining elements (157) arranged on the upper side of said transport support (18), preferably with a clearance therebetween.

## Revendications

1. Dispositif pour charger de colis un espace de chargement (3) d'un avion,
avec au moins un organe de transport qui, de façon motorisée, peut être déplacé depuis une ouverture de chargement de l'espace de chargement (3) en direction de l'extrémité opposée dudit espace, et retour,
organe qui, sous la forme d'un support de transport (18) du genre tapis réalisé en une matière textile flexible, recouvre à plat le fond (14) de l'espace de chargement (3), et au moyen duquel un colis, délivré sur l'organe de transport dans la région de l'ouverture de chargement, peut être transporté à l'intérieur de l'espace de chargement (3) en éloignement de l'ouverture de chargement, et, lors du déchargement, ramené en direction de l'ouverture de chargement,
**caractérisé** en ce que le support de transport (18) s'appuie sur une plaque de glissement (143), et
en ce que la plaque de glissement (143) est, sur ses bords latéraux,
soutenue en suspension au-dessus de la construction de soutien (145) du fond de l'espace de chargement (3) de telle sorte qu'en présence d'une charge nominale maximale sur le support de transport (18), la plaque de glissement (143) n'est pas encore posée sur la construction de soutien (145) du fond de l'espace de chargement (3).

2. Dispositif selon la revendication 1, **caractérisé** en ce que la fixation latérale de la plaque de glissement (143) s'effectue par l'intermédiaire de ressorts (148), qui sont mis sous une tension accrue par la charge sur le support de transport (18).

3. Dispositif selon la revendication 1 ou 2, **caractérisé** en ce que des barres de soutien (147) s'étendant en direction longitudinale sont prévues dans la région médiane de l'espace de chargement (3), barres qui, en cas d'affaissement excessif de la plaque de glissement (143), constituent des appuis définis pour la plaque de glissement (143).

4. Dispositif selon l'une quelconque des revendications 1 à 3, **caractérisé** en ce que la plaque de glissement (143) est réalisée en construction composite légère, sous la forme d'une construction sandwich ou en nid d'abeilles rigide en flexion.

5. Dispositif selon l'une quelconque des revendications 1 à 4**, caractérisé** en ce que les bords latéraux du support de transport (18) sont protégés de mouvements latéraux de contraction indésirables par une construction mécanique de retenue, et en ce que la construction de retenue est disposée sur le dessus de la plaque de glissement (143).

6. Dispositif selon la revendication 5, **caractérisé** en ce que la construction de retenue présente une barre de retenue (159) avec un bord d'arrêt (158), lequel vient en prise, de préférence avec jeu, au-dessus d'éléments de retenue (157) en saillie, disposés sur le dessus du support de transport (18).
